Europäisches Patentamt

European Patent Office

Office européen des brevets

(19)

(11) Veröffentlichungsnummer : **0 340 585 B1**

(12) # EUROPÄISCHE PATENTSCHRIFT

(45) Veröffentlichungstag der Patentschrift :
**08.04.92 Patentblatt 92/15**

(51) Int. Cl.$^5$ : **C01G 37/14**

(21) Anmeldenummer : **89107349.6**

(22) Anmeldetag : **24.04.89**

(54) **Verfahren zur Herstellung von Na-Dichromat.**

(30) Priorität : **05.05.88 DE 3815240**

(43) Veröffentlichungstag der Anmeldung :
**08.11.89 Patentblatt 89/45**

(45) Bekanntmachung des Hinweises auf die
Patenterteilung :
**08.04.92 Patentblatt 92/15**

(84) Benannte Vertragsstaaten :
**DE ES FR GB IT**

(56) Entgegenhaltungen :
**DE-A- 2 151 323
US-A- 3 784 672
CHEMICAL ABSTRACTS, Band 89, Nr. 14, 2.
Oktober 1978, Seite 321, Zusammenfassung
Nr. 114579p, Columbus, Ohio, US; & JP-A-78 39
971 (NIPPON CHEMICAL INDUSTRIAL CO.,
LTD) 12-04-1978**

(73) Patentinhaber : **BAYER AG
W-5090 Leverkusen 1 Bayerwerk (DE)**

(72) Erfinder : **Glissmann, Albert E.B., Dr.
Galkhausener Strasse 3
W-4018 Langenfeld (DE)**

## Beschreibung

Die Erfindung betrifft ein Verfahren zur Herstellung von Na-Dichromat unter Verwertung der bei der Chromsäureherstellung aus Natriumdichromat und Schwefelsäure anfallenden Natriumhydrogensulfatschmelze.

Diese Schmelze enthält neben Na-Hydrogensulfat, freie Schwefelsäure, Chromsäure, Chromsulfat und ein unlösliches Na-Cr- Sulfatkomplexsalz. Die Anteile in der Schmelze hängen von den Reaktionsbedingungen der Chromsäureherstellung ab.

Die Chromgehalte betragen im Mittel 2,5 bis 3,5 % $CrO_3$ und 0,5 bis 1,5 % $CR_2O_3$. Wegen des hohen $H_2SO_4$-Gehalts in Form von Hydrogensulfat und freier Schwefelsäure und des Gehaltes an 6-wertigem Chrom hat man mehrfach versucht, eine Lösung des Hydrogensulfats für die Absäuerung der Monochromatlösungen der Dichromatfabrikation zu verwenden. Der Gehalt an 3-wertigen Chromverbindungen führt jedoch zur Bildung und Ausfällung von schwer filtrierbaren Cr(III)/Cr(VI)-Verbindungen, die zu so großen Fabrikationsschwierigkeiten in der Dichromatfabrikation führen, daß diese Verwendung wieder aufgebeben wurde.

Aus der italienischen Patentanmeldung 26 686 A/75 ist es bekannt, daß die Monochromatlösungen zu etwa 80 % mit dem Abfallhydrogensulfat abgesäuert werden und in einem Kochprozeß in 2 Stufen die Cr(III)/Cr(VI)-Verbindungen ausgeschieden werden. Nach dem Abfiltrieren der Cr(III)/Cr(VI)-Verbindungen werden die Filtrate frei von 3-wertigen Chromverbindungen in den Dichromatbetrieb eingeleitet. Die Cr(III)/Cr(VI)-Verbindungen dienen als Rohstoff für die Herstellung von Cr(III)-Salzen.

Gemäß der DE-A-21 51 323 erhält man eine weitestgehend von 3-wertigem Chrom freie, für die Absäuerung der Monochromatlösung verwendbare Bisulfatlösung, durch Umsetzung der Bisulfatlösung mit Persulfatanionen und Erwärmung auf 60 bis 120°C. Die Persulfatanionen wurden durch anodische Oxidation von Bisulfatlösung an Platinanoden hergestellt. Diese Verfahren ist aber sehr aufwendig.

Es wurde nun gefunden, daß man auf sehr einfache Weise eine zur Absäuerung von Monochromatlösung einsetzbare Na-Hydrogensulfatlösung erhalten kann, wenn man ihr eine für die Bilding des 3-wertigen Chroms ausreichende Menge Phosphationen zusetzt.

Gegenstand der vorliegenden Erfindung ist ein Verfahren zur Herstellung von Na-Dichromat durch Umsetzung von Na-Chromat mit Säuren, welches dadurch gekennzeichnet ist, daß man neben Schwefelsäure als Säure zusätzlich $NaHSO_4$ einsetzt, das als Abfallprodukt bei der $CrO_3$-Herstellung anfällt, und wobei das mit Cr-Verbindungen verunreinigte $NaHSO_4$ mit $PO_4$-Ionen im Überschuß versetzt wird und das darin enthaltene Cr(III) als $CrPO_4$ bei Temperaturen von 50 bis 100°C und pH-Werten von 3 bis 6 ausgefällt wird.

Überraschenderweise kann mit diesem Phosphatzusatz eine Lösung von Na-Hydrogensulfat direkt für die Absäuerung von Monochromatlösungen verwendet werden. Das im Hydrogensulfat vorhandene 3-wertige Chrom wird vollständig als Chromphosphat ausgefällt, mit einem Wassergehalt von 4 bis 6 Mol $H_2O$.

Eine vorherige Abscheidung des im Na-Hydrogensulfat vorhandenen unlöslichen Na-Cr-Sulfatkomplexsalzes ist nicht notwendig, da die geringen Mengen des 3-wertigen Chroms, die durch Hydrolyse in Lösung gehen, sofort als Chromphosphat gefällt werden. Es tritt eine langsame Umwandlung des Na-Cr-Komplexsalzes in Chromphosphat ein.

Die Fällung des Chromphosphats erfolgt im pH-Bereich von 3 bis 6, bevorzugt von 4,5 bis 5,6. Hinsichtlich der Filtrierbarkeit des Niederschlags werden die besten Ergebnisse bei pH-Werten von 5,3 bis 5,6 erreicht, was einer 80 bis 95 %igen Absäuerung des Monochromats entspricht. Besonders vorteilhaft verläuft die Fällung, wenn der Überschuß an Phosphationen größer oder gleich 10 % ist.

Nach Abfiltrieren des Niederschlags, der aus Cr-Phosphat und der Restmenge des Na-Cr-Sulfatkomplexsalzes besteht, erhält man klare zu 80 bis 95 % abgesäuerte Dichromatlösung, frei von 3-wertigen Chromverbindungen. Diese werden zur weiteren Verarbeitung in den Dichromatbetrieb zurückgeführt.

Der Filterkuchen kann zur Entfernung des in ihm enthaltenen Na-Cr-Sulfats in Gegenwart von Phosphationen mit NaOH bei einem pH-Wert von 8 bis 10 behandelt werden. Es erfolgt restloser Umsatz zu Cr-Phosphat.

Die Chromanteile des anfallenden Cr-Phosphats können in bekannter Art und Weise in einem alkalisch oxidierenden Aufschluß in Monochromatlösung umgewandelt werden.

Als Quelle für Phosphationen kommen z.B. folgende Stoffe in Betracht: $H_3PO_4$, $Na_2HPO_4$, $NaH_2PO_4$.

Das erfindungsgemäße Verfahren wird in der allgemeinsten Form wie folgt ausgeführt:

Natriumhydrogensulfatschmelze aus der Chromsäureproduktion, die im Mittel 2,5-3,5 % $CrO_3$ und Anteile an 3-wertigen Chrom(0,5-1,5 %, gerechnet als $Cr_2O_3$) enthält, wird mit Wasser auf eine Dichte von ca. 1,3 kg/dm³ eingestellt. Entsprechend dem Cr(III)-Gehalt wird Phosphorsäure im mindestens 10 %igen Überschuß zugesetzt und diese Lösung zur Teilabsäuerung von Monchromatlösungen verwendet. Die Temperatur des Prozesses liegt zwischen 60 und 80°C, der pH-Wert beträgt zweckmäßig etwa 4,5-5,6. Der in diesem ph-Bereich ausgefällte Niederschlag, der im wesentlichen aus Chromphosphat besteht, wird noch heiß filtriert und das Filtrat, frei von Cr(III)-Ionen, der weiteren Verwendung im Dichromatprozeß überstellt.

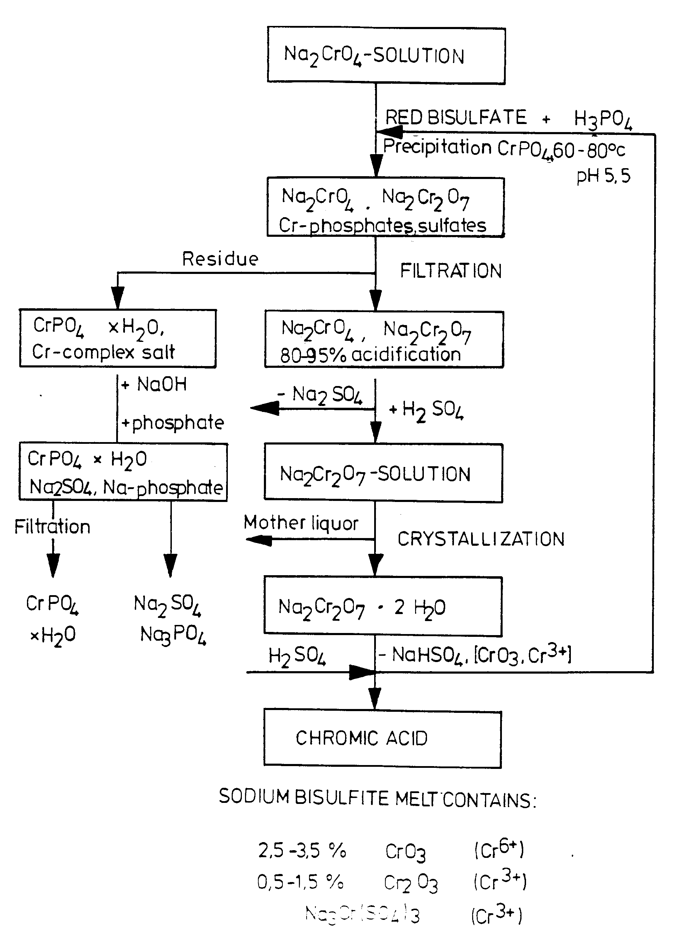

Eine spezielle Ausführungsform des erfindungsgemäßen Verfahrens wird im beiliegenden Fließschema (Fig. 1) dargestellt.

Anhand der folgenden Beispiele soll das erfindungsgemäße Verfahren noch näher erläutert werden (%-Angaben sind - soweit nichts anderes angegeben - Gew.-%).

Beispiel 1

1 kg Na-Hydrogensulfatschmelze wird in 1.500 ml Wasser gelöst (spez. Gew. 1,3). Entsprechend dem $CR_2O_3$-Gehalt der Na-Hydrogensulfatschmelze von 1 % $Cr_2O_3$ werden der Lösung 14,3 g $H_3PO_4$ entsprechend einem 10 %igen Überschuß zugesetzt.

Mit dieser Lösung wird Monochromatlösung bei einer Temperatur von 60°C bis zum pH-Wert 5,4 abgesäuert.

Aus der zunächst dunklen Lösung fällt das 3-wertige Chrom als Chromphosphat mit 4 bis 6 Mol Kristallwasser aus.

Der Niederschlag wird heiß filtriert. Der $Cr_2O_3$-Gehalt beträgt 26 %. Im Filtrat ist kein 3-wertiges Chrom enthalten.

Beispeil 2

Abhängigkeit der Filtriergeschwindigkeit vom pH-Wert.

Je 500 ml Monochromatlösung werden mit einer Lösung von Na-Hydrogensulfat, spez. Gewicht 1,3, die mit 17 g $H_3PO_4$ pro kg Hydrogensulfat (10 %iger Überschuß bezogen auf die Cr(III)-Menge) versetzt ist, auf verschiedene pH-Werte abgesäuert.

Die Lösungen werden auf 80°C erwärmt und die Filtrationszeit gemessen.

| Monochromat | $NaHSO_4$ + $H_3PO_4$ | pH | Filtrationszeit |
|---|---|---|---|
| 500 ml | 210 ml | 6,5 | 15 Minuten |
| 500 ml | 258 ml | 6,0 | 9,7 Minuten |
| 500 ml | 273 ml | 5,5 | 2,1 Minuten |
| 500 ml | 283 ml | 5,23 | 3 Minuten |
| 500 ml | 286 ml | 4,7 | 8 Minuten |

Die günstigsten Filtrationszeiten liegen bei den pH-Werten 5,5 und 5,23, was einer 90 bis 95 %igen Absäuerung entspricht.

Beispiel 3

Verhalten des im Na-Hydrogensulfat enthaltenen Na-Cr-Sulfatkomplexsalzes bei Zugabe von Phosphorsäure.

Je 20 g des Na-Cr-Sulfatkomplexsalzes werden in 300 ml Wasser angeschlämmt und mit je 4 ml $H_3PO_4$ (85 %) versetzt.

Da bei der Umsetzung des Doppelsalzes zu Cr-Phosphat Phosphorsäure als schwache Säure durch Schwefelsäure ersetzt wird, tritt im Verlauf der Reaktion eine Abnahme des pH-Wertes ein, die durch Zugabe von NaOH ausgeglichen werden kann.

Die Zugabegeschwindigkeit von NaOH ist ein Maß für den Verlauf der Reaktion.

| pH-Wert | Beobachtungs-zeit | erreichter Umsatz | g Nieder-schlag | % $Cr_2O_3$ |
|---|---|---|---|---|
| 3,0-5,4 | 9 Stunden | 45 % | 16,46 g | 22,6 % |
| 3,3-6,2 | 6 Stunden | 50 % | 15,34 g | 24,1 % |
| 7 -10 | 2 Stunden | 95 % | 11,9 g | 31,4 % |
| 10 -11 | 1 Stunde | 100 % | 12,2 g | 30,9 % |

**Patentansprüche**

1. Verfahren zur Herstellung von Na-Dichromat durch Umsetzung von Na-Chromat mit Säuren, dadurch gekennzeichnet, daß man neben Schwefelsäure als Säure zusätzlich $NaHSO_4$ einsetzt, das als Abfallprodukt bei der $CrO_3$-Herstellung anfällt, und wobei das mit CR-Verbindungen verunreinigte $NaHSO_4$ mit $PO_4$-Ionen im Überschuß versetzt wird und das darin enthaltene Cr(III) als $CrPO_4$ bei Temperaturen von 50 bis 100°C und pH-Werten von 3 bis 6 ausgefällt wird.

2. Verfahren nach Anspruch 1, dadurch gekennzeichnet, daß die Fällung des Chromphosphats bei 60 bis 80°C und pH-Werten von 4,5-5,5 erfolgt.

3. Verfahren nach Anspruch 1 oder 2, dadurch gekennzeichnet, daß der überschuß an $PO_4$-Ionen größer oder gleich 10 % beträgt.

**Claims**

1. A process for the production of Na dichromate by reaction of Na chromate with acids, characterized in that, in addition to sulfuric acid, $NaHSO_4$ formed as waste product in the production of $CrO_3$ is additionally used as an acid, $PO_4$ ions being added in excess to the $NaHSO_4$ contaminated with Cr compounds and the Cr(III) present therein being precipitated as $CrPO_4$ at temperatures of 50 to 100°C and at pH values of 3 to 6.

2. A process as claimed in claim 1, characterized in that the chromium phosphate is precipitated at 60 to 80°C and at pH values of 4.5 to 5.5.

3. A process as claimed in claim 1 or 2, characterized in that the excess of $PO_4$ ions is greater than or equal to 10%.

**Revendications**

1. Procédé de production de bichromate de sodium par réaction de chromate de sodium avec des acides, caractérisé en ce qu'on utilise en outre comme acide, à côté d'acide sulfurique, du $NaHSO_4$ qui est obtenu comme résidu dans la production de $CrO_3$, et dans lequel on ajoute au $NaHSO_4$ contaminé par des composés de chrome des ions $PO_4$ en excès et on précipite le chrome Cr(III) qui y est contenu sous forme de $CrPO_4$ à des températures de 50 à 100°C et à des valeurs de pH de 3 à 6.

2. Procédé suivant la revendication 1, caractérisé en ce que la précipitation du phosphate de chrome est effectuée à 60-80°C et à des valeurs de pH de 4,5 à 5,5.

3. Procédé suivant la revendication 1 ou 2, caractérisé en ce que l'excès d'ions $PO_4$ est supérieur ou égal à 10 %.

SODIUM BISULFITE MELT CONTAINS:

| | | |
|---|---|---|
| 2,5 -3,5 % | $CrO_3$ | ($Cr^{6+}$) |
| 0,5 -1,5 % | $Cr_2 O_3$ | ($Cr^{3+}$) |
| | $Na_3Cr(SO_4)_3$ | ($Cr^{3+}$) |